# EUROPÄISCHE PATENTSCHRIFT

(11) **EP 3 766 695 B1**
(45) Veröffentlichungstag und Bekanntmachung des Hinweises auf die Patenterteilung: **24.08.2022**
(21) Anmeldenummer: 20185611.9
(22) Anmeldetag: 14.07.2020
(51) Int. Cl.: B32B 23/08, B32B 1/00, B32B 7/12, B32B 27/06, B32B 27/08, B32B 27/30, B65D 65/40, C08L 1/00

(54) **VERWENDUNG EINER VERSCHWEISSBAREN VERBUNDFOLIE FUER DIE VERPACKUNG VON FEUCHTEN UND FETTHALTIGEN LEBENSMITTELN**
USE OF A WELDABLE COMPOSITE FILM FOR THE PACKAGING OF MOIST AND FAT-CONTAINING FOODSTUFFS
UTILISATION D'UNE FEUILLE COMPOSITE SOUDABLE POUR L'EMBALLAGE DE DENRÉES ALIMENTAIRES HUMIDES ET GRASSES

(30) Priorität: 18.07.2019 AT 506522019
(43) Veröffentlichungstag der Anmeldung: 20.01.2021
(73) Patentinhaber: S.A.M. Innovations GmbH & Co KG, 9020 Klagenfurt am Wörthersee (AT)
(72) Erfinder: Kuchler, Constantin, 9212 Techelsberg (AT); Kuchler, Fritz, verstorben (AT); Kuchler, Valentina, 9212 Techelsberg am Wörther See (AT)
(74) Vertreter: Speringer, Markus

(56) Entgegenhaltungen:
- WO-A1-2017/175225
- DE-A1- 2 102 374
- US-A- 3 540 966
- US-A- 5 391 423

## Beschreibung

### Technisches Gebiet

Die Erfindung betrifft die Verwendung einer verschweißbaren Verbundfolie für die Verpackung von feuchten und fetthaltigen Lebensmitteln, wie beispielsweise aufgeschnittene Wurst oder Käse, wobei die Verbundfolie aus regenerierter Cellulose besteht und an den Außenseiten eine durchgehende Beschichtung aus lebensmittelechtem Kunststoff auf Basis von Acryl, Polyvinylacetat (PVA) und/oder Polyvinylidenchlorid (PVDC) aufweist.

### Stand der Technik

Es ist seit langem bekannt, regenerierte Cellulose, auch Hydratcellulose genannt, für die Herstellung von biologisch abbaubaren Folien einzusetzen. Diese durchsichtigen Folien werden auch bei der Verpackung von Lebensmitteln eingesetzt. Üblicherweise kommen diese Folien lediglich bei trockenen Lebensmitteln, wie beispielsweise bei Keksen, oder als Überverpackung von beispielsweise Kartonverpackungen zum Einsatz. Wenn feuchte und fetthaltige Lebensmittel in derartigen Folien verpackt werden sollen, so müssen die Hydratcellulose-Folien eine entsprechende Beschichtung aufweisen, da sie andernfalls für Feuchtigkeit und Fett durchlässig wären bzw. durch die Flüssigkeitsaufnahme aufquillt und sich schnell zersetzt. Diese Beschichtungen aus biologisch nicht abbaubaren Polymeren sind in entsprechenden Dicken aufgebracht, damit die Folie insgesamt für die Verpackung von feuchten und fetthaltigen Lebensmitteln geeignet wird. Dies bedeutet aber in aller Regel, dass die entstandene Verbundfolie, was die Entsorgung betrifft, nicht mehr als kompostierbarer Abfall gilt, sondern, ähnlich wie herkömmliche Kunststoffverpackungen, aufwändig entsorgt werden muss. Dies läuft dem Trend zur weitgehenden Vermeidung von nicht abbaubaren Einwegkunststoffverpackungen entgegen.

Es gibt auch Folien aus regenerierter Cellulose, welche Beschichtungen mit biologisch nicht abbaubaren Kunststoffen aufweisen, wobei die Masse der Beschichtungen innerhalb der Verbundfolie eine Gesamtmenge von 5% nicht übersteigt. Dies bedeutet, dass gemäß der Norm EN 13432 die Folie weiterhin als kompostierbar gilt, weil sie zu mindestens 95% aus der biologisch abbaubaren regenerierten Cellulose besteht. Folien mit einer derart dünnen Beschichtung weisen aber wieder die oben genannten Nachteile auf, dass sie für die Verpackung und Lagerung von feuchten Lebensmitteln, wie beispielsweise Wurst- oder Käseaufschnitt bzw. Fleisch ungeeignet sind, da sie sich zu schnell zersetzen.

Die DE 1779124 A beschreibt beispielsweise ein Kaschierverfahren für zwei beidseitig beschichtete Zellglas-Folien. Diese können entweder nur durch Hitze miteinander verbunden werden, oder auch mittels eines Klebers. Der Anteil der Beschichtung beträgt laut der Offenbarung der DE 1779124 A1 zwischen 5% und 15%. Damit wird im Randbereich auch, wie oben erwähnt, eine biologisch abbaubare Folie erzeugt. Es wird in der Druckschrift jedoch nicht offenbart wofür die genannten Folien einsetzbar sein sollen. In der Praxis werden Folien im abbaubaren Bereich lediglich für die Verpackung trockener Waren eingesetzt, da sie andernfalls rasch aufquellen und durchlässig sind, während Folien mit dickeren Beschichtungen aus Polymeren auch für feuchte und fetthaltige Waren eingesetzt werden können, dann aber nicht mehr als biologisch abbaubar gelten.

Die DE 2102374 A1 offenbart ein Foliengefüge, bei dem eine Lage aus regenerierter Cellulose mit einer PET-Folie laminiert wird und zudem die Celluloselage mit einer PVDC-Beschichtung überzogen ist. Das Foliengefüge dient speziell als Verpackungsmaterial für Nahrung, welche in Imbissen serviert wird. Im Detail werden hier jedoch nur Kartoffelchips und Erdnüsse genannt, welche zwar fett, in aller Regel aber nicht feucht sind. Der Folienverbund besteht nicht notwendigerweise zu mehr als 95 Gew.-% aus regenerierter Cellulose und ist allein schon durch das Vorhandensein der PET-Folie nicht mehr als biologisch abbaubar einzustufen. Auch sind keine beidseitigen Lagen aus PVA oder PVDC vorhanden und auch keine zwei Celluloselagen.

### Kurzbeschreibung der Erfindung

Aufgabe der Erfindung ist es nun, die Verwendung einer Verbundfolie für die Verpackung von feuchten und fetthaltigen Lebensmitteln zu ermöglichen, bei welcher die Verbundfolie biologisch abbaubar ist, gleichzeitig aber auch bei der Verpackung von feuchten und fetthaltigen Lebensmitteln, wie Wurst- oder Käseaufschnitt, Fleisch oder dergleichen, nicht binnen kürzester Zeit aufquillt oder gar durchlässig wird. Die Folie soll möglichst dünn und klar durchsichtig sein und sich in Haptik und Optik nicht von herkömmlichen nicht abbaubaren Kunststofffolien unterscheiden. Die Folie soll ferner verschweißbar sein, damit sie in automatisierten Verpackungsstraßen eingesetzt werden kann.

Diese Aufgabe wird durch die Verwendung einer Verbundfolie gemäß Anspruch 1 gelöst, die zu mindestens 95 Gew.-% aus regenerierter Cellulose besteht, und bei welcher die Celluloseschicht im Inneren der Verbundfolie zweilagig ist, wobei die beiden Lagen durch zwei Schichten von lebensmittelechtem Kunststoff voneinander getrennt sind, welche gleich jener der äußeren Beschichtung sind, und wobei zwischen den beiden inneren Schichten aus lebensmittelechtem Kunststoff zumindest eine Klebeschicht vorgesehen ist. Es hat sich in überraschender Weise herausgestellt, dass ein mehrlagiger Aufbau mit zwei innenliegenden Celluloseschichten sowie zwei außenliegenden und zwei inneren Schichten aus lebensmittelechtem Kunststoff der oben beschriebenen Art, wobei die inneren Kunststoffschichten durch eine Klebeschicht miteinander verbunden sind, eine deutliche Verbesserung bei der Verpackung von feuchten Lebensmittel darstellt. Die Gesamtmasse der Beschichtungen aus lebensmittelechtem, nicht abbaubarem Kunststoff sowie der Klebeschicht beträgt dabei weniger als 5 Gew.-% der Gesamtmasse, wobei jede einzelne Schicht aus nicht abbaubarem Kunststoff etwa gleich dick ist.

Unter lebensmittelechtem Kunststoff sind jene Stoffe gemeint, welche dem Eigenschaftskatalog in der Lebensmittelchemie entsprechen, welcher in den jeweiligen Gesetzen und Normen für die Verwendung unterschiedlicher Stoffe für die Verpackung von Lebensmittel aufgezeichnet ist und vom jeweiligen Gesetzgeber gefordert wird. Es ist dem Durchschnittsfachmann deshalb geläufig, welche Stoffe er diesbezüglich auszuwählen hat.

Es ist ferner ein bevorzugtes Merkmal, dass zwischen den beiden inneren Schichten aus lebensmittelechtem Kunststoff zusätzlich zumindest abschnittsweise Aufdrucke von einer oder mehreren Druckfarben vorgesehen sind, wobei die Druckfarben vorzugsweise ebenfalls lebensmittelecht sind. Bei der Herstellung der Verbundfolie werden zuerst die Schichten aus regenerierter Cellulose beidseitig mit der Beschichtung aus nicht abbaubarem Kunststoff versehen. Anschließend kann eine oder auch beide Celluloseschichten an der am Ende innenliegenden Beschichtungsseite zumindest abschnittsweise bedruckt werden. Zum Bedrucken kommen ebenfalls lebensmittelechte und/oder biologisch abbaubare Druckfarben zum Einsatz. Nach dem Bedrucken werden die beiden nun fertig beschichteten und bedruckten Celluloseschichten mittels einer Klebeschicht miteinander verbunden, wobei die bedruckten Abschnitte danach im Inneren liegen. Damit ist die Verbundfolie fertig hergestellt. Das Anbringen des Aufdrucks im Inneren der Verbundfolie hat den Vorteil, dass die Folie bei der Verwendung in einer Schweißanlage an der Außenseite vollflächig verschweißbar bleibt und entsprechende Schweißnähte nicht durch etwaige Aufdrucke behindert werden. Die Herstellung der Folie kann somit vereinfacht werden, da Aufdrucke nicht mehr auf entsprechende Formate je nach Verpackung abgestimmt werden müssen, sondern durchgehend über die gesamte Folie angeordnet sein können. Die Verschweißung an jedem Punkt der Folie bleibt weiterhin möglich.

Schließlich ist es ein weiteres vorteilhaftes Merkmal, dass die verwendete Verbundfolie eine Dicke im Bereich von 30 bis 80 µm, bevorzugt von 45 bis 50 µm aufweist. Diese Foliendicke hat sich insbesondere für die Verwendung in automatischen Verpackungsstraßen mit Schweißeinrichtung, beispielsweise für die Verpackung von Wurst- oder Käseaufschnitt, als besonders vorteilhaft erwiesen. Dünnere Folien können den Anforderungen hinsichtlich der Lagerungsfähigkeit nicht gerecht werden, da sie zu schnell aufquellen und sich zu zersetzen anfangen. Dickere Folien bereiten Probleme bei der Handhabung in den automatischen Verpackungsstraßen und führen zu unvollständigen Verschweißungen, was ebenfalls nachteilig ist.

### Kurze Beschreibung der Zeichnungsfiguren

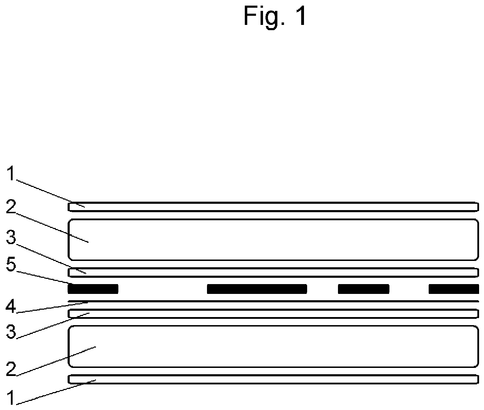

Die Erfindung wird nun in größerem Detail anhand eines Ausführungsbeispiels sowie mit Hilfe der beiliegenden Figur beschrieben. Dabei zeigt
Fig. 1 eine schematische Ansicht des Schichtaufbaus einer erfindungsgemäßen Verbundfolie.

### Beschreibung der Ausführungsarten

In der Fig. 1 ist schematisch ein Schichtaufbau einer Verbundfolie für die erfindungsgemäße Verwendung dargestellt, wobei die Schichtdicken zur besseren Ansicht stark vergrößert dargestellt sind. Auch sind die Schichtdicken nicht im korrekten Maßstab zueinander dargestellt. Die beiden Celluloseschichten 2 sind jeweils an der nach außen gewandten Seite mit einer durchgehenden Beschichtung 1 aus nicht abbaubarem Kunststoff, auf Basis von Acryl, PVA und/oder PVDC, versehen. An den Innenseiten weisen sie ebenfalls eine Beschichtung 3 aus dem gleichen Kunststoff auf, wobei alle Schichtdicken der Beschichtungen 1,3 gleich dick sind und in Summe bezogen auf die gesamte Verbundfolie nur etwa 4% der Gesamtmasse ausmachen. Zwischen den beiden inneren Beschichtungen 3 befinden sich abschnittsweise Aufdrucke 5 sowie eine Klebeschicht 4. Die Aufdrucke und die Klebeschicht machen in Summe maximal 1% der Gesamtmasse aus. Als Klebstoff kann beispielsweise ein auf einem Polyol basierender Klebstoff oder ein Polyurethankleber eingesetzt werden.

Bei der Entwicklung der Verbundfolie wurden als Vergleichsbeispiele mehrere abbaubare Folien aus regenerierter Cellulose mit nur Beschichtungen 1 an der Außenseite und unterschiedlichen Schichtdicken hinsichtlich ihrer Eignung für die Lagerung von nassen Lebensmitteln getestet. Die Beschichtungen an der Außenseite der durchgehenden einzelnen Celluloseschicht 2 betrugen jeweils eine Masse von 4% bezogen auf die Gesamtmasse. Es wurden jeweils gleiche Mengen eines frisch aufgeschnittenen Wurstaufschnitts zwischen zwei Testfolien mittels einer automatischen Schweißeinrichtung eingeschweißt und anschließend gekühlt gelagert. In regelmäßigen Zeitabständen wurde die Folie hinsichtlich ihrer Optik, Haptik, sowie der Wasseraufnahme untersucht. Ferner wurden die entstandenen Verpackungen hinsichtlich der Qualität der Schweißnaht sowie hinsichtlich des einfachen Öffnens durch Aufziehen entlang der Schweißnaht untersucht.

Bei der Optik wurde speziell darauf geachtet, ob es an der Folie zu einer Wellenbildung kommt. Hinsichtlich der Haptik wurde untersucht, ob sich die Elastizität oder die Oberfläche der Folie bei andauernder Lagerung verändert. Hinsichtlich der Wasseraufnahme wurde untersucht, ob mit freiem Auge Kondensatbildung in der Folie sichtbar wird.

Bei der Qualität der Schweißnaht (Siegelfähigkeit) wurde untersucht, ob über den gesamten Verpackungsrand hinweg eine durchgehende Schweißnaht zwischen den beiden Folien ausgebildet wird. Hinsichtlich des einfachen Öffnens (Peelfähigkeit) wurde untersucht, ob sich die Deckfolie entlang der Schweißnaht ohne Einreißen und ohne zu großen Kraftaufwand abziehen lässt.

Die gleichen Versuche wurden ebenfalls mit einer erfindungsgemäßen Verbundfolie mit einer Dicke von 46 µm durchgeführt.

Die Ergebnisse sind in der unten angegebenen Tabelle zusammengefasst (die Folien mit 23,30,45 und 80 µm sind jeweils Vergleichsbeispiele mit nur einer äußeren Beschichtung 1 und ohne den inneren Beschichtungen 2, wohingegen die in der Tabelle zuletzt angeführte Folie mit 46 µm die erfindungsgemäße Folie mit mehrschichtigem Aufbau ist):

**Tabelle 1**

| Folie | Optik | Haptik | Wasseraufnahme | Siegelfähigkeit | Peelfähigk eit |
|---|---|---|---|---|---|
| 23 µm | starke Wellen bildung nach 2-3 h | wird elastisch nach 2-3h | Kondensatbildung nach 3 Tagen | brennt beim Verschweißen durch | Einreißen an der Schweißnaht |
| 30 µm | Wellen bildung nach 2-3 h | wird elastisch nach 1 Tag | Kondensatbildung nach 3 Tagen | durchgehende Schweißnaht | sehr gut aufreißbar |
| 45 µm | Wellen bildung nach 2-3 h | wird elastisch nach 2 Tagen | geringe Kondensatbildung nach 3 Tagen | durchgehende Schweißnaht | sehr gut aufreißbar |
| 80 µm | Wellen bildung nach 3 Tagen | behält Festigkeit auch nach 5 Tagen | geringe Kondensatbildung nach 5 Tagen | Schweißnaht nicht durchgehend | zu leicht aufreißbar |
| 46 µm | leichte Wellen bildung nach 5 Tagen | behält Festigkeit auch nach 5 Tagen | keine Kondensatbildung auch nach 5 Tagen | durchgehende Schweißnaht | sehr gut aufreißbar |

Wie sich überraschend zeigt, weist die Folie für die erfindungsgemäße Verwendung mit 46 µm und einem Aufbau mit insgesamt 4 Beschichtungslagen und zwei Celluloseschichten deutlich verbesserte Eigenschaften auf, als beispielsweise eine Folie mit vergleichbarer Dicke von 45 µm und nur außenseitigen Beschichtungen. Da die Gesamtmasse der Beschichtungen in allen Fällen nur 4% der gesamten Verbundfolie beträgt, bedeutet dies, dass bei der Vergleichsfolie mit 45 µm die Außenbeschichtungen deutlich dicker sind, als bei der für die erfindungsgemäße Verwendung vorgesehenen Verbundfolie mit insgesamt 4 Kunststoffbeschichtungen. Die für die erfindungsgemäße Verwendung vorgesehene Folie zeigt aber in allen Eigenschaften eine deutliche Verbesserung gegenüber der Vergleichsfolie mit 45 µm. Selbst gegenüber einer beinahe doppelt so dicken Vergleichsfolie mit nur außenseitigen Beschichtungen ist die Folie für die erfindungsgemäße Verwendung in ihren Eigenschaften überlegen, insbesondere, da die dickere Folie in den automatisierten Schweißeinrichtungen nicht mehr verarbeitbar ist.

Die Verbundfolie für die erfindungsgemäße Verwendung löst folglich die gestellte Aufgabe eine einfach zu verarbeitende, biologisch abbaubare Verpackungsfolie zu schaffen, welche auch für feuchte und fetthaltige Lebensmittel geeignet ist. Zusätzlich bietet die Verbundfolie eine einfache Möglichkeit, Produktkennzeichnungen und Ähnliches innerhalb der Verbundfolie aufzudrucken, ohne den weiteren Arbeitsablauf des Verschweißens zu beeinträchtigen.

## Patentansprüche

1. Verwendung einer verschweißbaren Verbundfolie für die Verpackung von feuchten und fetthaltigen Lebensmitteln, wie beispielsweise aufgeschnittene Wurst oder Käse, wobei die Verbundfolie zu mindestens 95 Gew.-% aus regenerierter Cellulose besteht und an den Außenseiten eine durchgehende Beschichtung (1) aus lebensmittelechtem Kunststoff auf Basis von Acryl, Polyvinylacetat (PVA) und/oder Polyvinylidenchlorid (PVDC) aufweist,und wobei die Celluloseschicht (2) im Inneren der Verbundfolie zweilagig ist, und wobei ferner die beiden Lagen durch zwei Schichten (3) von lebensmittelechtem Kunststoff voneinander getrennt sind, welche gleich jener der äußeren Beschichtung (1) sind, und wobei zwischen den beiden inneren Schichten (3) aus lebensmittelechtem Kunststoff zumindest eine Klebeschicht (4) vorgesehen ist.

2. Verwendung einer verschweißbaren Verbundfolie für die Verpackung von feuchten und fetthaltigen Lebensmitteln nach Anspruch 1, **dadurch gekennzeichnet, dass** zwischen den beiden inneren Schichten (3) aus lebensmittelechtem Kunststoff zusätzlich zumindest abschnittsweise Aufdrucke (5) von einer oder mehreren Druckfarben vorgesehen sind, wobei die Druckfarben vorzugsweise ebenfalls lebensmittelecht sind.

3. Verwendung einer verschweißbaren Verbundfolie für die Verpackung von feuchten und fetthaltigen Lebensmitteln nach Anspruch 1 oder 2, **dadurch gekennzeichnet, dass** die Verbundfolie eine Dicke im Bereich von 30 bis 80 µm, bevorzugt von 45 bis 50 µm aufweist.

## Claims

1. Use of a weldable composite film for the packaging of moist and fatty foodstuffs, such as sliced sausage or cheese, wherein the composite film consists of at least 95% by weight of regenerated cellulose and includes on the outer sides a continuous coating (1) of food-safe plastic based on acrylic, polyvinyl acetate (PVA) and/or polyvinylidene chloride (PVDC), and wherein the cellulose layer (2) in the interior of the composite film is double-layered, and wherein the two layers are further separated from each other by two layers (3) of food-safe plastic which are the same as that of the outer coating (1), and wherein between the two inner layers (3) made of food-safe plastic at least one adhesive layer (4) is provided.

2. Use of a weldable composite film for the packaging of moist and fatty foodstuffs according to claim 1, **characterized in that** between the two inner layers (3) of food-safe plastic imprints (5) of one or more printing inks are additionally provided at least in sections, wherein the printing inks are preferably food-safe, too.

3. Use of a weldable composite film for the packaging of moist and fatty foodstuffs according to claim 1 or 2, **characterised in that** the composite film includes a thickness in the range from 30 to 80 µm, preferably from 45 to 50 µm.

## Revendications

1. Utilisation d'une feuille composite thermosoudable pour emballer des aliments humides et gras, comme par exemple des tranches de charcuterie ou de fromage, ladite feuille composite étant constituée à au moins 95 % en poids de cellulose régénérée et comportant, sur ses faces extérieures, un revêtement (1) continu en une matière plastique apte au contact alimentaire qui est à base de matières acryliques, de poly(acétate de vinyle) (PVA) et/ou de poly(chlorure de vinylidène) (PVDC), la couche de cellulose (2) à l'intérieur de la feuille composite se composant d'au moins deux strates, ces deux strates étant en outre séparées l'une de l'autre par deux couches (3) en une matière plastique apte au contact alimentaire qui sont du même type que celle du revêtement (1) extérieur, et au moins une couche d'adhésif (4) étant disposée entre les deux couches (3) intérieures en matière plastique apte au contact alimentaire.

2. Utilisation d'une feuille composite thermosoudable pour emballer des aliments humides et gras selon la revendication 1, **caractérisée en ce qu'**au moins sur certaines parties, des motifs imprimés (5) en une ou plusieurs encres sont en outre disposés entre les deux couches (3) intérieures en matière plastique apte au contact alimentaire, lesdites encres étant de préférence également aptes au contact alimentaire.

3. Utilisation d'une feuille composite thermosoudable pour emballer des aliments humides et gras selon les revendications 1 ou 2, **caractérisée en ce que** ladite feuille composite présente une épaisseur comprise entre 30 et 80 µm, de préférence entre 45 et 50 µm.
